# FASCICULE DE BREVET EUROPEEN

(11) **EP 3 086 653 B1**
(45) Date de publication et mention de la délivrance du brevet: **20.03.2019**
(21) Numéro de dépôt: 14831027.9
(22) Date de dépôt: 23.12.2014
(51) Int. Cl.: A23D 7/00, A23D 7/01, A23D 7/02, A21D 13/00, A23L 33/00, A21D 2/16

(54) **PROCÉDÉ DE FABRICATION D'UNE COMPOSITION LIPIDIQUE SANS HUILE DE PALME, SON UTILISATION DANS UN PRODUIT ALIMENTAIRE**
VERFAHREN ZUR HERSTELLUNG LIPIDZUSAMMENSETZUNG OHNE PALMÖL, VERWENDUNG DAVON IN EINEM NAHRUNGSMITTELPRODUKT
PROCESS FOR THE PRODUCTION OF A LIPID COMPOSITION WITHOUT PALM OIL, USE THEREOF IN A FOOD PRODUCT

(30) Priorité: 23.12.2013 FR 1363504
(43) Date de publication de la demande: 02.11.2016
(73) Titulaire: Savane Brossard, 75013 Paris (FR)
(72) Inventeur: LECOINTE, Armelle, 45330 Malesherbes (FR)
(74) Mandataire: Cabinet Plasseraud
(86) Numéro de dépôt international: PCT/FR2014/053550
(87) Numéro de publication internationale: WO 2015/097417

(56) Documents cités:
- WO-A1-2013/078187
- FR-A1- 2 986 692

## Description

### DOMAINE DE L'INVENTION

La présente invention concerne une composition lipidique utilisable dans les produits alimentaires qui ne contient ni matière grasse hydrogénée ou partiellement hydrogénée, ni huile de palme.

### ARRIERE-PLAN TECHNOLOGIQUE

L'huile de palme est une huile végétale qui entre aujourd'hui dans la composition de nombreux produits alimentaires. Elle est obtenue par pression à chaud de la pulpe des fruits du palmier à huile. Il s'agit d'un produit apprécié des industries agroalimentaires en raison de ses propriétés physiques, rhéologiques et organoleptiques. Elle est de ce fait utilisée dans tous les types de produits alimentaires fabriqués par les industries agroalimentaires : margarine, plats cuisinés, pizza, chips, biscuits apéritifs, céréales, pâte à tartinée, pâtisseries, gâteaux, biscuits, viennoiseries, biscottes...

La surconsommation actuelle d'huile de palme est maintenant critiquée. D'une part, la production massive d'huile de palme est accusée de détruire l'environnement des principales régions productrices (Malaisie, Indonésie, Bornéo et Sumatra), et de porter préjudice aux nombreuses espèces animales endémiques et/ou protégées de ces régions comme l'orang-outan. D'autre part, il est connu que l'huile de palme contient un taux d'acides gras saturés très élevé. Or, on soupçonne que la consommation excessive d'acides gras saturés pourrait être à l'origine de l'augmentation du taux de mauvais cholestérol (LDL-cholestérol) dans le sang et de ce fait favoriserait les maladies cardio-vasculaires.

La substitution de l'huile de palme par d'autres matières lipidiques est donc souhaitée. Cependant, cette substitution doit avantageusement se faire en modifiant le moins possible le procédé de fabrication des produits alimentaires et en modifiant le moins possible les propriétés organoleptiques du produit alimentaire fini.

Une alternative a été proposée dans la demande de brevet FR 2 986 693. Ce document propose de remplacer l'huile de palme dans des produits de viennoiserie, de panification ou de biscuiterie par une préparation huileuse sous forme liquide ou pâteuse comprenant une huile végétale différente de l'huile de palme (huile de colza) et un polysaccharide (fibres alimentaires cellulosiques) ou un émulsifiant (mélange de mono & triglycérides), et, éventuellement de l'eau.

### OBJECTIFS DE L'INVENTION

Au vu de l'art antérieur susvisé, il serait préférable de disposer d'une composition de substitution de l'huile de palme, qui ait une texture et des propriétés physiques et rhéologiques proches de celles de la matière grasse contenant de l'huile de palme, et ce, de préférence, sans mettre en oeuvre d'additifs alimentaires.

Cette composition lipidique de substitution à l'huile de palme aurait également avantage à être un ingrédient alimentaire, notamment pour des produits de pâtisserie, apte à conférer de bonnes propriétés organoleptiques (*e.g.* moelleux) et nutritionnelles, aux aliments dans la composition desquels il est susceptible d'entrer.

Cette composition lipidique de substitution à l'huile de palme, gagnerait aussi à ne pas affecter la durée de conservation des produits alimentaires industriels susceptibles de la contenir, comme par exemple des produits alimentaires (*e.g*. pâtisseries) de moyenne ou longue durée de vie (MDV ou LDV).

Il est également souhaitable que cette composition lipidique de substitution à l'huile de palme, soit simple à utiliser dans un processus industriel alimentaire.

En outre, cette composition lipidique de substitution à l'huile de palme se veut économiquement viable.

L'un des objectifs de la présente invention est de proposer une composition lipidique satisfaisant à au moins l'une des spécifications susvisées. Cette composition est destinée à remplacer de manière partielle ou totale l'huile de palme dans des préparations alimentaires afin d'améliorer leurs qualités organoleptiques et nutritionnelles.

L'invention a également pour objectif de fournir un procédé de fabrication simple et économique d'un tel ingrédient.

Un autre objectif de l'invention est de proposer un produit alimentaire, de préférence un produit de pâtisserie comprenant une matière grasse autre que l'huile de palme, qui soit savoureux, moelleux, à longue durée de conservation et aisé à fabriquer, sans augmentation déraisonnable du coût de revient. En particulier, il serait avantageux que le procédé de fabrication d'un tel produit alimentaire, offre la même souplesse et les mêmes possibilités de création esthétique que le procédé de fabrication de produit alimentaire analogue avec huile de palme.

### BREVE DESCRIPTION DE L'INVENTION

La présente invention satisfait à au moins l'un des objectifs susévoqués.

Elle a tout d'abord pour objet un procédé de préparation d'une composition lipidique caractérisé en ce qu'il consiste essentiellement à:
a) disperser au moins une partie d'un épaississant, dans de l'eau à une température inférieure à la température de gélatinisation de l'épaississant,
b) chauffer cette préparation à une température supérieure ou égale à la température de gélatinisation de l'épaississant, de préférence sous agitation, pendant une durée suffisante pour gélatiniser l'épaississant;
c) refroidir la dispersion gélatinisée, de préférence au plus tard 15 minutes après la gélatinisation, jusqu'à une température inférieure ou égale à la température de gélatinisation de l'épaississant, de préférence inférieure ou égale à 50°C, préférentiellement inférieure ou égale à 30°C pour obtenir un lait épaissi, de préférence un lait amidonné,
d) homogénéiser ledit lait ainsi obtenu avec un émulsifiant, de préférence avec un émulsifiant à base de jaune(s) d'oeuf(s),
e) former une émulsion à partir du mélange lait/émulsifiant homogénéisé à l'étape d) et d'huile, de préférence en incorporant progressivement l'huile au mélange lait/émulsifiant de l'étape d).composition lipidique, de préférence une émulsion huile dans eau, caractérisée en ce que :

Cette composition lipidique à une teneur en huile de palme inférieure ou égale à, en % en poids par rapport au poids total de la composition et dans un ordre croissant de préférence : 99 ; 90 ; 80 ; 60; 40 ; 20 ; 10 ; 5 ; 3 ; 2 ; 1 ; 0,1 ; 0,01 ; 0,001.

Sa teneur en acides gras saturés est inférieure ou égale à, en % en poids par rapport au poids total de la composition et dans un ordre croissant de préférence : 30 ; 25; 20; 15; 12; 10;

Sa viscosité Brookfield à 20°C est supérieure ou égale 50.000 mPa.s et, de préférence inférieure ou égale à 120.000 mPa.s.

Elle comprend au moins une huile autre que l'huile de palme, de l'eau, au moins un émulsifiant à base de lécithine, de préférence à base de jaune d'oeuf, au moins un épaississant de préférence à base d'amidon, et plus préférentiellement encore à base d'amidon natif.

De préférence, la composition lipidique ne comprend pas d'huile de palme.

Ce substitut à l'huile de palme est de préférence une émulsion huile dans eau, contenant par exemple du jaune d'oeuf et de l'amidon natif.

Conformément à un mode remarquable de réalisation de l'invention, cette composition lipidique, est exempte d'additif émulsifiant, le terme "additif" étant pris dans son acception légale, c'est-à-dire tel que défini par la législation alimentaire, et notamment les règlements UE N°11279-2011 & CE N°1333-2008.

En outre, au sens de l'invention, le terme "exempt" vise aussi bien l'absence totale d'additif émulsifiant que la présence d'au moins un additif émulsifiant dans une concentration inférieure ou égale à -en % en poids par rapport à la masse totale de la composition et dans un ordre croissant de préférence- 2 ; 1,5 ; 1 ; 0,5 ; 0,1 ; 10⁻² ; 10⁻³ ; 10⁻⁴ ; 10⁻⁵ ; 10⁻⁶.

Cette composition se singularise aussi par sa teneur réduite voire nulle en huile de palme et par sa teneur réduite en matière grasse hydrogénée ou partiellement hydrogénée, ce qui lui confère des atouts nutritionnels et organoleptiques certains.

D'autres objets de cette invention sont:
▪ l'utilisation de la composition lipidique selon l'invention, comme matière grasse dans des produits de pâtisserie,
▪ un produit de pâtisserie, de préférence gâteau moelleux, comprenant la composition lipidique selon l'invention ou obtenue par le procédé selon l'invention.

### DESCRIPTION DETAILLEE DE L'INVENTION

### Définitions

Ces définitions sont données à tout le moins à titre d'exemple, pour contribuer à l'interprétation du présent exposé.

La *"viscosité Brookfield à 20°C*" est mesurée sur un viscosimètre Brookfield - modèle DVIII, équipé d'un mobile spindle 07. La mesure est effectuée à vitesse constante (50 tr/min pendant 30 secondes à 20°C.

Au sens de l'invention, un "*additif"* est un additif alimentaire au sens législatif du terme, notamment selon les règlements UE N°11279-2011 & CE N°1333-2008

Au sens de l'invention, la *"gélatinisation"* de l'épaississant est l'augmentation de sa viscosité sous l'effet d'une montée en température en présence d'eau. Dans le cas de l'amidon, le chauffage, en excès d'eau, entraîne le gonflement des grains d'amidon et la perte de leur structure semi-cristalline et de la biréfringence y associée. Cela se traduit par le passage d'un aspect blanchâtre à un aspect vitreux.

Dans un mode de réalisation préféré, la composition lipidique selon l'invention est une émulsion H/E, de consistance pâteuse et de viscosité déterminée supérieure ou égale à 50.000 mPa.s. Ces caractéristiques rhéologiques font de ce substitut d'huile de palme un équivalent technologique de l'huile de palme.

La composition peut dans l'une de ses variantes particulièrement avantageuse, satisfaire au critère marketing "*clean label",* c'est dire que sa teneur en "*additif"* alimentaire autre qu'un additif émulsifiant est inférieure ou égale à, en % en poids par rapport au poids total de la composition et dans un ordre croissant de préférence : 99 ; 90 ; 80 ; 60; 40 ; 20 ; 10 ; 5 ; 3 ; 2 ; 1 ; 0,1 ; 0,01 ; 0,001; ou, mieux encore, ladite composition ne comprend pas d'additif autre qu'un additif émulsifiant.

Cet avantage sanitaire pour le consommateur peut se doubler d'un intérêt technologique dès lors que l'épaississant n'est lui aussi pas un "*additif",* par exemple lorsqu'il s'agit d'amidon natif. Dans cette variante privilégiée, la viscosité Brookfield à 20°C de la composition lipidique est inférieure à 80.000 mPa.s. Il est alors possible de contrôler certains paramètres technologiques, comme par exemple dans le cas d'un produit de pâtisserie, la diffusion de pâtes de couleurs différentes au cours de la cuisson, pour contrôler les motifs ainsi formés.

Selon une modalité remarquable de l'invention, la composition lipidique de substitution à l'huile de palme, comporte une émulsion huile dans eau et l'un des ingrédients pour la préparation de l'émulsion est une dispersion colloïdale dans l'eau, de l'épaississant au moins en partie gélatinisé. Cette caractéristique facilite la réplication du comportement d'une matière grasse à base d'huile de palme, dans un produit alimentaire, tel qu'un produit de pâtisserie.

Avantageusement, une formulation plus détaillée de la composition lipidique selon l'invention, peut être -en % en poids par rapport au poids total de la composition et dans des ordres croissants de préférence-:
- Huile : de 55% à 98 % ; de 65% à 95% ; de 70% à 90% ; de 80% à 90% ;
- Jaune d'oeuf : de 0,5% à 20 % ; de 1% à 15% ; de 2% à 12% ; de 5% à 10% ; de 7% à 8%;
- Amidon : de 0,05% à 10 % ; de 0,1% à 8% ; de 0,2% à 5% ; de 0,3% à 1% ; de 0,3% à 0,8%; et
- Eau : de 1% à 20 % ; de 3% à 15% ; de 5% à 12% ; de 6% à 11% ; de 7% à 10%.

Selon un mode de réalisation très préféré, la composition lipidique selon l'invention consiste en :
- environ 83% en poids, d'huile,
- environ 7,5% en poids, de jaune d'oeuf,
- environ 0,5% en poids d'amidon, et
- environ 9% d'eau,
par rapport au poids total de la composition.

Il est intéressant de relever que la composition lipidique selon l'invention peut comprendre-en % en poids par rapport au poids total des acides gras de la composition-de 10 à 30 %, de préférence de 15 à 25 % d'acide linoléique; et de 1 à 20 %, de préférence de 5 à 15 % d'acide linolénique.

L'huile utilisée dans la composition selon l'invention est de préférence une huile ou un mélange de plusieurs huiles, utilisable(s) dans l'alimentation, liquide à température ambiante. De préférence, l'huile est choisie parmi les huiles ayant des profils nutritionnels intéressants, notamment celles présentant un taux d'acides gras insaturés élevé. L'huile peut être choisie dans le groupe constitué par l'huile de colza, tournesol, arachide, avocat, carthame, olive, pépins de raisin, sésame, soja, germe de maïs, noix, pépin de courge, pavot, lin., et leurs mélanges. Il peut s'agir tout particulièrement d'une huile de colza.

Le jaune d'oeuf utilisé dans la composition lipidique selon l'invention peut se présenter sous les formes connues dans l'industrie agro-alimentaire. Il peut s'agir de jaune d'oeuf sous sa forme naturelle, sous forme stabilisée, en poudre... Il peut s'agir tout particulièrement de jaune d'oeuf stabilisé par des enzymes du type phospholipases qui permettent de renforcer le pouvoir émulsifiant de la lécithine naturellement contenue dans cette matière première.

L'épaississant utilisé dans la composition lipidique selon l'invention est de préférence choisi dans le groupe consistant en :
- les polysaccharides et leurs mélanges, et en particulier les amidons. Il peut s'agir d'amidon natif ou d'un amidon modifié, ou d'un mélange de plusieurs amidons natifs et/ou modifiés. Les amidons modifiés présentent l'avantage de développer un pouvoir gélifiant supérieur. Cependant, il est préféré dans la présente invention d'utiliser un amidon natif. L'amidon peut être choisi parmi les amidons d'origine végétale variée, connu pour être utilisable dans l'industrie agro-alimentaire. Il peut être choisi dans le groupe constitué par l'amidon de maïs, l'amidon de blé, l'amidon de pomme de terre (...), et leurs mélanges. Il peut s'agir tout particulièrement d'un amidon de maïs natif.
- les farines fonctionnelles de différentes origines végétales et leurs mélanges.

La composition lipidique selon l'invention peut en outre comprendre un hydrocolloïde. La présence d'un hydrocolloïde peut permettre avantageusement d'apporter du corps à la composition. Cet hydrocolloïde peut notamment être une gomme xanthane. Toutefois, dans un mode de réalisation préféré de la présente invention, la composition ne contient pas d'hydrocolloïde.

La composition lipidique selon l'invention peut être obtenue par un procédé comprenant les étapes a) à d) susdéfinies.

En outre, cette composition lipidique présente l'avantage de pouvoir être conservée à température ambiante, sans subir de dénaturation.

L'invention vise l'utilisation de la composition lipidique susdéfinie comme matière grasse dans des produits de pâtisserie, de préférence des gâteaux moelleux, notamment de moyenne ou longue durée de vie (MDV ou LDV)

Les produits de pâtisserie, pris en tant que tels, qui comprennent comme matière grasse, la matière grasse émulsionnée selon l'invention ou obtenue par le procédé susdéfini, sont d'autres objets de l'invention.

Ce sont de préférence des gâteaux moelleux, notamment de moyenne ou longue durée de vie (MDV ou LDV).

Ces produits de pâtisserie peuvent être également caractérisés en ce que
- leur teneur en acides gras saturés est inférieure ou égale à 10%, de préférence 5 % en poids, par rapport à la masse totale du produit de pâtisserie considéré;
- et/ou leur teneur en acides gras insaturés est supérieure ou égale à 14%, de préférence à 18 % en poids, par rapport à la masse totale du produit de pâtisserie considéré.

### EXEMPLES

### Exemple 1 : Préparation de la composition lipidique suivant l'invention (substitut huile de palme) : Essais de texturisation de l'huile de colza

Des essais de texturisation d'huile de colza ont été réalisés afin de lui conférer une texture proche de celle de la matière grasse classiquement utilisée dans le secteur de la pâtisserie traditionnelle, épaisse à ferme d'aspect homogène.

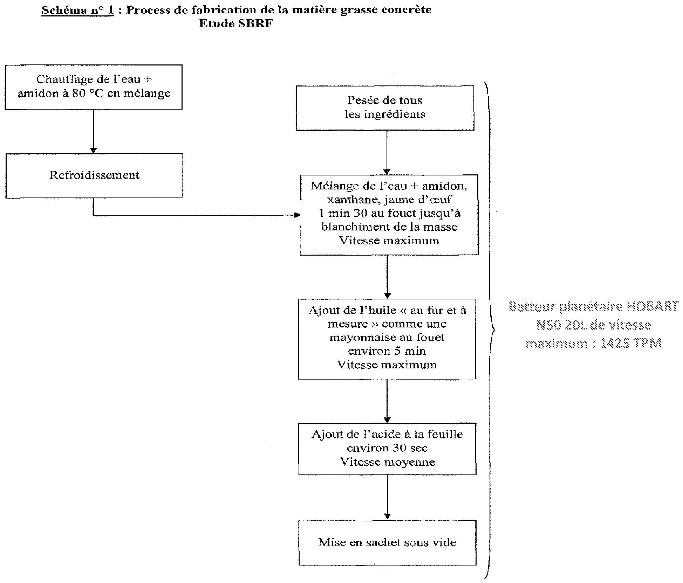

Ainsi plusieurs types de matières grasses texturées ont été élaborés selon le procédé de fabrication schéma n°1 sur la **figure unique** annexée.

Le dispositif utilisé est du type Batteur planétaire HOBART N50 20L de vitesse maximum : 1425 TPM

Ces essais sont des formulations émulsion huile dans eau, stables et riches en matières grasses et sont exposées dans le tableau 1 ci-après.

Ces produits mettent en oeuvre du jaune d'oeuf stabilisé salé à 11%.

Cet ingrédient est obtenu par l'action enzymatique d'une phospholipase A2 sur les acides gras du jaune d'oeuf. Le jaune d'oeuf ainsi obtenu n'est un "*additif"* au sens de l'invention.

Cet ingrédient associé à un amidon modifié de maïs (COLFLO 67 de National Starch) permet de réaliser des émulsions stables de viscosité élevée, à haute teneur en matières grasses (80 à 84% d'huile de colza).

**Tableau 1 : formulation de matières grasses texturées**

| **Ingredients(%)** | **Humidité** | **Lipides** | **Glucides** | **Protéines** | **Echantillons** | | | | | | | | |
|---|---|---|---|---|---|---|---|---|---|---|---|---|---|
| | | | | | **ST** | **H4** | **H7** | **H71** | **H7111** | **H711A** | **H711B** | **H711C** | **H711D** |
| Huile de palme | | | | | 42,00 | | | | | | | | |
| huile de colza | 0,00 | 100,00 | 0,00 | 0,00 | 21,00 | 80,00 | 84,00 | 82,00 | 82,90 | 83,00 | 83,20 | 83,20 | 83,10 |
| Huile de coprah | | | | | 21,00 | | | | | | | | |
| Eau | 100,00 | 0,00 | 0,00 | 0,00 | 15,00 | 12,80 | 6,80 | 8,80 | 8,80 | 8,80 | 8,80 | 8,80 | 8,80 |
| Jaune d'oeuf stabilisé 11% | 51,00 | 23,20 | 0,20 | 14,60 | | 5,00 | 7,50 | 7,50 | 7,50 | 7,50 | 7,50 | 7,50 | 7,50 |
| Amidon de maïs modifié COLFLO 67 | 15,00 | 0,00 | 85,00 | 0,20 | | 1,00 | 0,50 | 0,50 | 0,50 | 0,50 | 0,50 | | |
| Amidon de maïs natif | 13,00 | 0,00 | 85,00 | 0,20 | | 0,80 | 0,80 | 0,80 | | | | 0,50 | 0,50 |
| Xanthane | | | 73,80 | 0,20 | | 0,40 | 0,30 | 0,30 | 0,30 | 0,20 | | | 0,10 |
| Acide citrique | | | | | | 0,10 | 0,10 | 0,10 | | | | | |
| Sel | | | | | 0,44 | | | | | | | | |
| Emulsifiant : mono- et diglycérides d'acides gras | | | | | 0,39 | | | | | | | | |
| Correcteur d'acidité : acide citrique | | | | | 0,24 | | | | | | | | |
| Colorant : béta-carotène | | | | | 0,20 | | | | | | | | |
| *pH* | | | | | *nd* | *4,70* | *7,65* | *nd* | *nd* | *nd* | *nd* | *nd* | *nd* |
| | | | | *Humidité* | *nd* | *nd* | *nd* | *12,74* | *12,74* | *12,73* | *12,70* | *12,70* | 1*2,71* |
| | | | | *Lipides* | *nd* | *nd* | *nd* | *84,54* | *84,64* | *84,74* | *84,94* | *84,94* | *84,84* |
| | | | | *Glucides* | *nd* | *nd* | *nd* | *nd* | *0,66* | *0,59* | *0,44* | *0,44* | *0,44* |
| | | | | *Protéines* | *nd* | *nd* | *nd* | *nd* | *1,1* | *1,1* | *1,1* | *1,1* | *1,1* |

### Exemple 2 : essais de mise en oeuvre dans une matrice de type cake

Des maquettes de gâteaux type « pâte jaune » incorporant les différentes formulations de matières grasses élaborées telles que définies dans l'exemple 1 sont préparées, comme suit dans le tableau 2:

**Tableau 2 : essais de comparaison de produits pâte jaune incorporant différents types de matières grasses**

| **Ingrédients** | **Echantillons** | | | | | |
|---|---|---|---|---|---|---|
| | **ST** | **SHC** | **SH4** | **SH7** | **SH711C** | **SH711D** |
| Farine T45 | 27,96 | 27,96 | 27,96 | 27,96 | 28,02 | 28,02 |
| sucre cristal | 22,58 | 22,58 | 22,58 | 22,58 | 22,58 | 22,58 |
| coule d'oeuf | 23,12 | 23,12 | 23,12 | 23,12 | 23,12 | 23,12 |
| **Margarine ST** | 20,43 | | | | | |
| **huile de colza** | | 20,43 | | | | |
| **huile concrète H4** | | | 20,51 | | | |
| **huile concrète H7** | | | | 20,51 | | |
| **huile concrète H711C** | | | | | 20,51 | |
| **huile concrète H711D** | | | | | | 20,51 |
| sirop de glucose | 2,69 | 2,69 | 2,69 | 2,69 | 2,69 | 2,69 |
| Amidon de blé natif | 1,83 | 1,83 | 1,83 | 1,83 | 1,83 | 1,83 |
| sucre vanilliné | 0,58 | 0,58 | 0,58 | 0,58 | 0,58 | 0,58 |
| pyrophosphate de sodium | 0,38 | 0,38 | 0,38 | 0,38 | 0,38 | 0,38 |
| bicarbonate de sodium | 0,19 | 0,19 | 0,19 | 0,19 | 0,19 | 0,19 |
| sorbate de potassium | 0,18 | 0,18 | 0,18 | 0,18 | 0,18 | 0,18 |
| sel fin séché épuré | 0,08 | 0,08 | 0,08 | 0,08 | 0,08 | 0,08 |
| *rendement de cuisson(en %)* | *91,14* | *91,35* | *88,95* | *88,7* | *88,72* | *88,7* |
| *densité de la pâte crue (en kg*/*l)* | *1,089* | *1,060* | *1,026* | *1,045* | *1,028* | *1,040* |
| *Aw* | *0,743* | *0,689* | *0,757* | *0,757* | *0,76* | *0,755* |
| *Humidité (en %)* | *14,38* | *11,47* | *14,58* | *14,46* | *14,47* | *14,50* |
| *pH* | *6,80* | *6,92* | *6,78* | *6,91* | *6,90* | *6,88* |

Les deux gâteaux témoins sont réalisés à partir de margarine standard Brossard (ST) et d'huile de colza (SHC).

Les résultats obtenus sont les suivants :
- Gâteau pâte jaune ST : produit correct en termes de texture et goût. Le produit est ferme mais reste moelleux en bouche. La margarine laisse un léger voile gras sur la langue
- Gâteau pâte jaune SH4 (matière grasse émulsionnée selon l'invention à 80% d'huile de colza) : la mie du produit est moins serrée et un peu moins régulière que celle du témoin. Le goût du gâteau est conforme sans faux goût. Le produit est légèrement plus développé que le produit témoin.
- Gâteau pâte jaune SH7 (matière grasse à 84% d'huile de colza) : le produit est plus développé que le témoin et proche visuellement du produit SH4. La mie est plus alvéolée que celle du témoin et le produit plus moelleux. La texture semble légèrement rappeuse en bouche et le produit semble un peu plus élastique à la mâche.
- Gâteau pâte jaune SHC (témoin huile de colza) : le produit est le moins développé de tous les gâteaux testés. Sa texture est également la plus sèche. Les produits SH4 et SH7 sont largement supérieurs, en termes de développement et de moelleux au gâteau SHC réalisé sans ajout d'additifs.
- Gâteau pâte jaune SH711 avec formulation à base d'amidon de maïs natif : le produit présente essentiellement une consistance plus souple et donne donc les meilleurs résultats.

Les gâteaux pâte jaune SH711C et D avec formulation à base d'amidon de maïs natif, présentent essentiellement une consistance plus souple et moins élastique que le gâteau SH7. Néanmoins, l'emmoulage de la pâte crue SH711C donne de meilleurs résultats car elle est un peu moins épaisse que la H711D et par conséquent s'étale davantage.

## Revendications

1. Procédé de préparation d'une composition lipidique **caractérisé en ce qu'**il consiste essentiellement à:
a) disperser au moins une partie d'un épaississant, dans de l'eau à une température inférieure à la température de gélatinisation de l'épaississant,
b) chauffer cette préparation à une température supérieure ou égale à la température de gélatinisation de l'épaississant, de préférence sous agitation, pendant une durée suffisante pour gélatiniser l'épaississant;
c) refroidir la dispersion gélatinisée, de préférence au plus tard 15 minutes après la gélatinisation, jusqu'à une température inférieure ou égale à la température de gélatinisation de l'épaississant, de préférence inférieure ou égale à 50°C, préférentiellement inférieure ou égale à 30°C pour obtenir un lait épaissi, de préférence un lait amidonné,
d) homogénéiser ledit lait ainsi obtenu avec un émulsifiant, de préférence avec un émulsifiant à base de jaune(s) d'oeuf(s),
e) former une émulsion à partir du mélange lait/émulsifiant homogénéisé à l'étape d) et d'huile, de préférence en incorporant progressivement l'huile au mélange lait/émulsifiant de l'étape d).

2. Procédé selon la revendication 1 **caractérisé en ce que** la composition lipidique obtenue est une émulsion huile dans eau:
▪ dont la teneur en huile de palme est inférieure ou égale à, en % en poids par rapport au poids total de la composition et dans un ordre croissant de préférence : 99 ; 90 ; 80 ; 60; 40 ; 20 ; 10 ; 5 ; 3 ; 2 ; 1 ; 0,1 ; 0,01 ; 0,001 ;
▪ dont la teneur en acides gras saturés est inférieure ou égale à, en % en poids par rapport au poids total de la composition et dans un ordre croissant de préférence : 30 ; 25; 20; 15; 12; 10 ;
▪ dont la viscosité Brookfield à 20°C est supérieure ou égale 50.000 mPa.s et, de préférence inférieure ou égale à 120.000 mPa.s ;
▪ et comprenant au moins une huile autre que l'huile de palme, de l'eau, au moins un émulsifiant à base de lécithine, de préférence à base de jaune d'oeuf, au moins un épaississant de préférence à base d'amidon, et plus préférentiellement encore à base d'amidon natif.

3. Procédé selon la revendication 1 ou 2 **caractérisé en ce que** la composition lipidique obtenue ne comprend pas d'huile de palme.

4. Procédé selon la revendication 2 ou 3 **caractérisé en ce que** la composition lipidique obtenue a une teneur en additif autre qu'un additif émulsifiant inférieure ou égale à, en % en poids par rapport au poids total de la composition et dans un ordre croissant de préférence : 99 ; 90 ; 80 ; 60; 40 ; 20 ; 10 ; 5 ; 3 ; 2 ; 1 ; 0,1 ; 0,01 ; 0,001; ou, mieux encore, ladite composition ne comprenant pas d'additif autre qu'un additif émulsifiant.

5. Procédé selon l'une quelconque des revendications précédentes **caractérisé en ce que** la composition lipidique obtenue a une viscosité Brookfield à 20°C, est inférieure à 80.000 mPa.s.

6. Procédé selon l'une quelconque des revendications précédentes **caractérisé en ce que** la composition lipidique obtenue comporte une émulsion huile dans eau et **en ce que** l'un des ingrédients pour la préparation de l'émulsion est une dispersion colloïdale dans l'eau de l'épaississant au moins en partie gélatinisé.

7. Procédé selon l'une quelconque des revendications précédentes **caractérisé en ce que** la composition lipidique obtenue comprend -en % en poids par rapport au poids total de la composition et dans des ordres croissants de préférence:
- Huile : de 55% à 98 % ; de 65% à 95% ; de 70% à 90% ; de 80% à 90% ;
- Jaune d'oeuf : de 0,5% à 20 % ; de 1% à 15% ; de 2% à 12% ; de 5% à 10% ; de 7% à 8%;
- Amidon : de 0,05% à 10 % ; de 0,1% à 8% ; de 0,2% à 5% ; de 0,3% à 1% ; de 0,3% à 0,8%; et
- Eau : de 1% à 20 % ; de 3% à 15% ; de 5% à 12% ; de 6% à 11% ; de 7% à 10%.

8. Procédé selon l'une quelconque des revendications précédentes **caractérisé en ce que** la composition lipidique obtenue comprend -en % en poids par rapport au poids total des acides gras de la composition- de 10 à 30 %, de préférence de 15 à 25 % d'acide linoléique; et de 1 à 20 %, de préférence de 5 à 15 % d'acide linolénique.

9. Utilisation de la composition lipidique telle que définie dans la revendication 7 comme matière grasse dans des produits de pâtisserie.

## Patentansprüche

1. Verfahren zur Herstellung einer Lipidzusammensetzung, **dadurch gekennzeichnet, dass** es im Wesentlichen besteht aus:
(a) mindestens einen Teil eines Verdickungsmittels in Wasser bei einer Temperatur unterhalb der Geliertemperatur des Verdickungsmittels dispergieren,
b) diese Zubereitung für eine ausreichende Zeit auf eine Temperatur erwärmen, die größer oder gleich der Geliertemperatur des Verdickungsmittels ist, vorzugsweise unter Rühren, um das Verdickungsmittel zu gelieren;
c) Kühlen der gelierten Dispersion, vorzugsweise spätestens 15 Minuten nach der Gelierung, auf eine Temperatur, die kleiner oder gleich der Geliertemperatur des Verdickungsmittels ist, vorzugsweise kleiner oder gleich 50°C, vorzugsweise kleiner oder gleich 30°C, um eine eingedickte Milch, vorzugsweise gestärkte Milch, zu erhalten,
(d) Homogenisieren der so erhaltenen Milch mit einem Emulgator, vorzugsweise mit einem Emulgator auf Basis von Eigelb(en),
(e) eine Emulsion aus dem homogenisierten Milch/Emulgator-Gemisch in Schritt (d) und Öl bilden, vorzugsweise durch schrittweises Einarbeiten des Öls in das Milch/Emulgator-Gemisch in Schritt (d).

2. Verfahren nach Anspruch 1, **dadurch gekennzeichnet, dass** die erhaltene Lipidzusammensetzung eine Öl-in-Wasser-Emulsion ist:
▪ mit einem Palmölgehalt, der in Gew.-% des Gesamtgewichts der Zusammensetzung nicht übersteigt, und in zunehmender Reihenfolge der Präferenz: 99 ; 90 ; 80 ; 60; 40 ; 20 ; 10 ; 5 ; 3 ; 2 ; 1 ; 0,1 ; 0,01 ; 0,001 ;
▪ mit einem Gehalt an gesättigten Fettsäuren, der in Gew.-%, bezogen auf das Gesamtgewicht der Zusammensetzung, nicht übersteigt, und in zunehmender Reihenfolge der Präferenz: 30; 25; 20; 15; 12; 10 ;
▪ mit einer Brookfield-Viskosität bei 20°C von 50.000 mPa.s oder mehr und vorzugsweise 120.000 mPa.s oder weniger;
▪ und umfassend mindestens ein anderes Öl als Palmöl, Wasser, mindestens einen Emulgator auf Basis von Lecithin, vorzugsweise auf Basis von Eigelb, mindestens ein Verdickungsmittel vorzugsweise auf Basis von Stärke und noch bevorzugter auf Basis von nativer Stärke.

3. Verfahren nach Anspruch 1 oder 2, **dadurch gekennzeichnet, dass** die erhaltene Lipidzusammensetzung kein Palmöl beinhaltet.

4. Verfahren nach Anspruch 2 oder 3, **dadurch gekennzeichnet, dass** die erhaltene Lipidzusammensetzung einen anderen Additivgehalt als ein emulgierendes Additiv von weniger als oder gleich, in Gew.-%, bezogen auf das Gesamtgewicht der Zusammensetzung, und in zunehmender Reihenfolge der Präferenz aufweist: 99; 90; 80; 60; 40; 20; 10; 5; 3; 2; 1; 0,1; 0,01; 0,001; oder, noch besser, wobei die Zusammensetzung keinen anderen Zusatz als einen Emulgatorzusatz umfasst.

5. Verfahren nach einem der obigen Ansprüche, **dadurch gekennzeichnet, dass** die erhaltene Lipidzusammensetzung eine Brookfield-Viskosität bei 20°C aufweist und weniger als 80.000 mPa.s beträgt.

6. Verfahren nach einem der vorstehenden Ansprüche, **dadurch gekennzeichnet, dass** die erhaltene Lipidzusammensetzung eine Öl-in-Wasser-Emulsion umfasst und dass einer der Bestandteile für die Herstellung der Emulsion eine kolloidale Dispersion in Wasser des zumindest teilweise gelierten Verdickungsmittels ist.

7. Verfahren nach einem der vorstehenden Ansprüche, **dadurch gekennzeichnet, dass** die erhaltene Lipidzusammensetzung - in Gew.-%, bezogen auf das Gesamtgewicht der Zusammensetzung, und in zunehmender Reihenfolge der Präferenz umfasst:
- Öl: von 55% bis 98%; von 65% bis 95%; von 70% bis 90%; von 80% bis 90%;
- Eigelb: von 0,5% bis 20%; von 1% bis 15%; von 2% bis 12%; von 5% bis 10%; von 7% bis 8%;
- Stärke: 0,05% bis 10%; 0,1% bis 8%; 0,2% bis 5%; 0,3% bis 1%; 0,3% bis 0,8%; und
- Wasser: von 1% bis 20%; von 3% bis 15%; von 5% bis 12%; von 6% bis 11%; von 7% bis 10%.

8. Verfahren nach einem der obigen Ansprüche, **dadurch gekennzeichnet, dass** die erhaltene Lipidzusammensetzung - in Gew.-%, bezogen auf das Gesamtgewicht der Fettsäuren der Zusammensetzung - 10 bis 30 %, vorzugsweise 15 bis 25 % Linolsäure, und 1 bis 20 %, vorzugsweise 5 bis 15 % Linolsäure umfasst.

9. Verwendung der Lipidzusammensetzung nach Anspruch 7 als Fett in Backwaren.

## Claims

1. Process for the preparation of a lipid composition, **characterized in that** it substantially consists of:
a) dispersing at least a portion of a thickener in water at a temperature less than the gelatinization temperature of the thickener,
b) heating this preparation to a temperature greater than or equal to the gelatinization temperature of the thickener, preferably while stirring, for a sufficient period of time to gelatinize the thickener;
c) cooling the gelatinized dispersion, preferably no later than 15 minutes after gelatinization, to a temperature less than or equal to the gelatinization temperature of the thickener, preferably less than or equal to 50°C, more preferably less than or equal to 30°C, to obtain a thickened milk, preferably a starch milk,
d) homogenizing the milk thus obtained with an emulsifier, preferably with an emulsifier based on egg yolk(s),
e) forming an emulsion from the milk/emulsifier mixture homogenized in step d) and oil, preferably by progressively incorporating the oil into the milk/emulsifier mixture of step d).

2. Process according to claim 1, wherein the lipid composition obtained is an oil-in-water emulsion:
▪ whose palm oil content is less than or equal to, in % by weight relative to the total weight of the composition and in increasing order of preference: 99; 90; 80; 60; 40; 20; 10; 5; 3; 2; 1; 0.1; 0.01; 0.001;
▪ whose saturated fatty acid content is less than or equal to, in % by weight relative to the total weight of the composition and in increasing order of preference: 30; 25; 20; 15; 12; 10;
▪ whose Brookfield viscosity at 20°C is greater than or equal to 50,000 mPa.s and preferably less than or equal to 120,000 mPa.s;
▪ and comprising: at least one oil other than palm oil, water, at least one emulsifier based on lecithin, preferably based on egg yolk, at least one thickener preferably based on starch, and more preferably based on native starch.

3. Process according to claim 1 or 2, wherein the lipid composition obtained does not comprise palm oil.

4. Process according to claim 2 or 3, wherein the lipid composition obtained has a content of additive other than an emulsifying additive that is less than or equal to, in % by weight relative to the total weight of the composition and in increasing order of preference: 99; 90; 80; 60; 40; 20; 10; 5; 3; 2; 1; 0.1; 0.01; 0.001; or better yet, said composition not comprising any additive other than an emulsifying additive.

5. Process according to any one of the preceding claims, wherein the lipid composition obtained has a Brookfield viscosity at 20°C, of less than 80,000 mPa.s.

6. Process according to any one of the preceding claims, wherein the lipid composition obtained comprises an oil-in-water emulsion and wherein one of the ingredients for the preparation of the emulsion is a colloidal dispersion in water of the at least partly gelatinized thickener.

7. Process according to any one of the preceding claims, wherein the lipid composition obtained comprises - in % by weight relative to the total weight of the composition and in increasing orders of preference:
- Oil: from 55% to 98%; from 65% to 95%; from 70% to 90%; from 80% to 90%;
- Egg yolk: from 0.5% to 20%; from 1% to 15%; from 2% to 12%; from 5% to 10%; from 7% to 8%;
- Starch: from 0.05% to 10%; from 0.1% to 8%; from 0.2% to 5%; from 0.3% to 1%; from 0.3% to 0.8%; and
- Water: from 1% to 20%; from 3% to 15%; from 5% to 12%; from 6% to 11%; from 7% to 10%.

8. Process according to any one of the preceding claims, wherein the lipid composition obtained comprises - in % by weight relative to the total weight of the fatty acids of the composition - from 10 to 30%, preferably from 15 to 25% linoleic acid; and from 1 to 20%, preferably from 5 to 15% linolenic acid.

9. Use of the lipid composition as defined in claim 7, as fat in pastry products.
